# EUROPÄISCHE PATENTSCHRIFT

(11) **EP 1 629 792 B1**
(45) Veröffentlichungstag und Bekanntmachung des Hinweises auf die Patenterteilung: **23.07.2008**
(21) Anmeldenummer: 05090178.4
(22) Anmeldetag: 17.06.2005
(51) Int. Cl.: A61C 8/00

(54) **Enossales Implantat und Verfahren zur Herstellung**
Endosseous implant and method of manufacturing
Implant intra-osseux et procédé de fabrication

(30) Priorität: 24.08.2004 DE 202004013500 U
(43) Veröffentlichungstag der Anmeldung: 01.03.2006
(73) Patentinhaber: Biomed Est., 9490 Vaduz (LI)
(72) Erfinder: Ihde, Stefan, 80802 München (DE)
(74) Vertreter: Radwer, Dieter

(56) Entgegenhaltungen:
- WO-A-01/26579
- US-A- 6 095 817
- US-A1- 2003 165 795

## Beschreibung

Die Erfindung betrifft ein weiter verbessertes enossales Implantat, das von crestal her in den Kieferknochen eingesetzt wird und zur Aufnahme und Befestigung eines Abutments oder eines Zementierpfostens für die nachfolgende Anordnung eines Brückengerüstes oder eines anderweitigen, dentalen Prothetikteiles dient und das Verfahren zu seiner Herstellung.

Die im Kieferknochen befindlichen Basisteile von Implantaten werden vorteilhafter Weise mit Oberflächenvergrößerungen versehen, um durch die Gewährleistung einer größtmöglichen Blutversorgung die Bildung von neuer Knochensubstanz anzuregen und bei Verkürzung der Einheilzeiten ein schnelles und sicheres Einwachsen des eingesetzten Implantates in den Kieferknochen zu erreichen und dadurch die Grundlage für einen dauerhaften und festen Sitz des Implantates zu schaffen.

Neben abrasiven Verfahren, die Oberfläche eines Implantates durch Ätzen, Sandstrahlen oder Lasertechniken zu vergrößern, sind auch bereits zahlreiche Lösungen vorgeschlagen worden, die eine durch Aufbringen von Material vergrößerte Makrostruktur der Oberfläche vorsehen.

Beispielsweise sind aus DE 297 07 545 U1 auch Suprastrukturen für zahnmedizinische Zwecke bekannt, nach der in die äußere und/oder innere Manteloberfläche des Implantatkörpers mit Hilfe der Lasertechnik Mikroeinschnitte und/oder Mikrovertiefungen eingebracht werden, wobei sich die Einschnitte bzw. Vertiefungen mit Glattflächen einander abwechseln.

Ein enossales Implantat mit einer äußerlichen Rillenstruktur in seiner Manteloberfläche ist aus DE 201 13 183 U1 bekannt. Die einzelnen Rillen der Rillenstruktur, die in der Längsachse des Implantates angeordnet sind und über ihre Länge eine unterschiedliche Tiefe aufweisen können, sind an radial verlaufende Vertiefungen angelagert, die den Außenmantel des Implantates in mehrere Abschnitte unterteilen.

Nach WO 00/06043 ist das Implantat mit einer ausgeformten Verankerungsstruktur versehen. Die Verankerungsstruktur besteht aus einer Verzahnung, die unter Bildung strukturfreier Zwischenräume wendelförmig auf der äußeren Mantelfläche des Implantates angeordnet ist.

In der dentalen Implantationspraxis wurden mit gutem Erfolg enossale Implantate eingesetzt, auf deren äußere Mantelfläche zum Zwecke der Oberflächenvergrößerung Titankugeln entsprechend DE 42 29 241 A1, US 6 095 817 oderUS 5 344 457 aufgesintert worden sind. Mit dem Aufsintern der Titankugeln entstehen Frei- und Hohlräume, die über Brückenhohlräume miteinander verbunden sind. In die so entstandenen Freiräume kann die sich bildende neue Knochensubstanz relativ schnell und leicht einwachsen, wobei die Knochenperfusion bzw. die Blutversorgung entscheidend verbessert und so die Bildung von neuem Knochengewebe verstärkt gefördert wird. Bei der Herstellung dieser Implantate hat sich aber gezeigt, dass es relativ schwierig ist, die Kantenbereiche des Implantates kongruent zu den später anzufertigenden Bohrstollen zu formen. Werden die Titankugeln über die gesamte Oberfläche nicht passgenau und formgetreu aufgesintert, entstehen Probleme beim Einsetzen des Implantates in das Implantatbett, namentlich die Primärstabilität ist beeinträchtigt. Dies kann zu Problemen beim Einheilen des Implantates führen. Ein dauerhaft fester Sitz kann dadurch nachteilig beeinflusst werden.

Der Erfindung liegt daher die Aufgabe zugrunde, eine Möglichkeit zu schaffen, die Kugeloberfläche auf einen Implantatkern so aufzubringen, dass die im Ergebnis erzielte Außenform möglichst exakt zur dem finalen Bohrer passt, was dann letztlich eine primärstabile Verankerung des Implantats ermöglicht.

Erfindungsgemäß wird die Aufgabe durch ein enossales Implantat gemäß den Merkmalen nach Anspruch 1 und durch ein Verfahren nach den Merkmalen von Anspruch 6 gelöst. Vorteilhafte Weiterbildungen der Erfindung ergeben sich aus den Merkmalen der Unteransprüche 2 bis 5 und 7 bis 9.

Nach der vorliegenden Erfindung ist im Eckbereich des distalen Endes des Implantates ein im wesentlichen umlaufender Kragen vorgesehen, der unter einem Winkel α zur Längsachse des Implantates angeordnet und dessen Außendurchmesser auf die finale Endform des Implantates einschließlich der aufgesinterten Titankugeln abgestimmt ist. In dem so entstehenden Raum zwischen dem Kopfabschnitt des Implantatkernes und dem umlaufenden Kragen am distalen Eckbereich sowie dem fußseitigen Innenraum, der durch den Kragen begrenzt wird, können die Titankugeln, die in an sich bekannter Weise mit einem abschmelzenden Haftmittel benetzt sind, modellierend aufgetragen oder unter Zuhilfenahme einer komplementären Außenform passgenau und formgetreu für den nachfolgenden Sinterprozess auf der Mantelfläche des Implantates fixiert werden. Auf relativ einfache Weise können so die vorstehend ausgeführten Nachteile, die auf eine ungenügende Ausformung der Kantenbereiche zurückzuführen sind, vermieden werden. Ohne den erfindungsgemäßen Kragen am distalen Ende des Implantatkernes ist es außerordentlich schwierig, die äußeren Kugeln in dem für den Halt wichtigen Kurvaturbereich des Implantatapex sicher und in Bezug auf den zur Aufbereitung der Knochenkavität verwendeten Bohrer formgerecht aufzubringen

Der erfindungsgemäße Kragen besitzt vorteilhafter Weise Ausschnitte, die kronenartig angeordnet sind. Durch diese Ausschnitte wird die Perfusion des Knochengewebes unterstützen und zur Verkürzung der Einheildauer beigetragen. Ein geschlossener, umlaufender Kragen, führt zu einer größeren Behinderung der Perfusion als ein durch die genannten Ausschnitte unterbrochener, kronenartig gestalteter Kragen.

Nach einem weiteren Merkmal der Erfindung enthält die aufzusinternde Kugelschicht neben den Titankugeln weitere, kleine Anteile an Kugeln, die aus einem abschmelzenden Material, z.B. Kunststoff, bestehen. Während des Sinterprozesses entstehen durch das Abschmelzen dieser Kugeln zusätzliche Frei- und Hohlräume, die die Knochenperfusion, d. h. die Blutversorgung der sich neu bildenden Knochensubstanz, weiter verbessern und das Einwachsen des sich neu bildenden Knochengewebes für einen dauerhaft festen Sitz des Implantates begünstigen. Die so erzielte Oberfläche ist noch besser dreidimensional für den Knochen zu durchwachsen.

Die Herstellung des erfindungsgemäßen Implantates, insbesondere das Aufsintern der Titankugeln und die Gewährleistung der Präzisionsanforderungen an ein passgenaues Implantat mit aufgesinterten Kugeln, ist nicht ganz unproblematisch und erfordert die strikte Beachtung einiger verfahrenstechnischer Besonderheiten.

Ein besonderes Erfordernis im Prozess der Herstellung besteht darin, dass die aufgesinterte Kugelschicht, wenn sie einmal aufgebracht worden ist, nicht mehr verschmutzt oder anderweitig kontaminiert werden darf, da sich derartige Verunreinigungen nicht mehr bzw. nicht mehr vollständig aus den Poren der Porenstruktur der aufgesinterten Kugeln herauslösen lassen.

Andererseits werden zum Aufsintern der Titankugel der Implantatkern und die auf den Implantatkern temporär fixierten Titankugeln auf ca 1400 ° C erwärmt, wobei die Oberflächen der Titankugeln leicht anschmelzen und die sich berührenden Kugeln untereinander und die mit dem Implantatkern in Kontakt befindlichen Titankugein mit diesen verbinden. Der Grad der Sinterung wird hierbei an Hand des Halsdurchmessers der miteinander verschmolzenen Kugelflächen bzw. am Übergang zum Implantatkern gemessen.

Das Aufsintern der Kugeln hat aber auch zur Folge, dass nicht nur die Kugeloberflächen bzw. Teile der Kugeloberfläche leicht anschmelzen und verformen sondern auch die Oberflächen des Implantatkernes. Die für den Implantataufbau notwendigen Präzisionsanforderungen, die beispielsweise an den Innenkonus, an das Innengewinde, an die innere Rotationssicherung und an den Außensechskant des Implantatkernes gestellt sind, können dadurch nicht mehr eingehalten werden.

Die mit dem Aufsintern der Kugeln verbundenen Probleme und Nachteile, wie vorstehend beschrieben, können dadurch vermieden und behoben werden, indem zunächst ein vorgefertigter Implantatkern mit der erfindungsgemäßen Außenkontur zur Aufnahme der Kugeln und einer einfachen Innenbohrung hergestellt, wobei dieser vorgefertigte Implantatkern an der Positionierung des späteren Außenkegels, des Innenkonus und/oder der rotationssichernden Kernanteile Außen- oder Innensechskant bzw. Achtkant vorzugsweise mit einem Aufmaß versehen ist. Auf den so vorgefertigten Implantatkern werden dann die Kugeln temporär fixiert und anschließend aufgesintert. Die in dem vorgefertigten Implantatkern eingebrachte Innenbohrung hat den Vorteil, dass sich der Implantatkern während des Sinterprozesses nicht über das erforderliche Maß erwärmt und dadurch gegebenenfalls Verformungen entstehen.

Nach Abschluss des Sinterprozesses wird der Implantatkern an der mit einem Aufmaß versehenen, kugelfreien parallelen Außenflächen in eine Werkzeugmaschine aufgenommen und eingespannt, um die inneren Präzisionsflächen - Innenkonus, Innengewinden und die innere Rotationssicherung - her- bzw. fertigzustellen. Vorteilhaft, aber nicht zwingend notwendig ist es, wenn wenigstens eine Bohrung schon vor dem Sintern in den Kern eingebracht wird, weil dann die für das Einspannen erforderliche Spannkraft für den Nachdrehprozess nicht mehr so groß sein muss und so herstellungsbedingte Verformungen und Beschädigungen des Implantatkerns vermieden werden. Abschließend wird der Implantatkern über die zuvor fertiggestellten inneren Präzisionsflächen aufgenommen, zentriert und in die Bearbeitungsmaschine eingespannt, um beispielsweise die Endform der äußere Passflächen resp. des Außenkonus herzustellen. Etwaige Schlieren, die sich durch das Sintern ergeben haben, können in diesem Endfertigungsprozess auch noch entfernt werden.

Alle spanabhebenden Formungsprozesse werden unter ständiger Luftkühlung durchgeführt, wobei die Kühlluft so zu geführt wird, dass keine Späne aus der spanabhebenden Bearbeitung oder anderweitige Verunreinigung in die Poren der aufgesinterten Kugelschicht eindringen können.

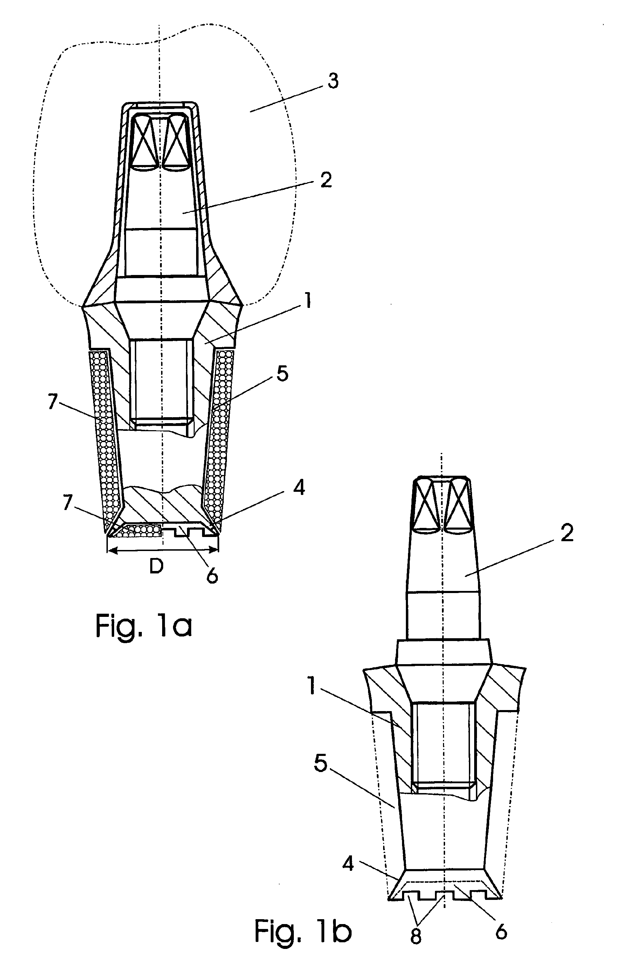

Die Erfindung soll nachstehend an einem Ausführungsbeispiel näher erläutert werden. In der dazugehörigen Zeichnung zeigen Fig. 1a und 1b ein nach der Erfindung hergestelltes enossales Implantat in schematischer Darstellung.

In das Implantat nach der Erfindung ist beispielsweise ein Abutment 2 eingeschraubt, das im vorliegenden Beispiel zur Aufnahme und Befestigung einer künstlichen Zahnkrone 3 an dem im Kieferknochen 1 eingesetzten Implantat dient. Der Implantatkern 1 besitzt erfindungsgemäß an seinem distalen Eckbereich einen umlaufenden Kragen 4, der unter einem Winkel α zur Längsachse des Implantates angeordnet und dessen Außendurchmesser D auf die finale äußere Passform des enossalen Implantates abgestimmt ist. Durch den umlaufenden Kragen 4 entsteht zwischen diesem und dem Kopfbereich des Implantatkernes 1 ein äußerer Ringraum 5 und ein fußseitiger Innenraum 6, der durch die Kontur des Kragens 4 begrenzt wird. In diesen äußeren Ringraum 5 und den fußseitigen Innenraum 6 kann die mit einem Haftmittel benetzte Schicht aus Titankugeln 7, die vorteilhafter Weise mit weiteren Kugelbestandteilen aus einem abschmelzenden Material versetzt ist, auf einfache Weise aufgetragen und/oder unter Verwendung einer komplementierenden Außenform in die finale Passform gebracht und dem Sinterprozess zugeführt werden.

Insbesondere ist es durch die vorliegende Erfindung möglich, auf eine Form, die die finale Außenform des Implantates bestimmt, zu verzichten, da diese auch Nachteile mit sich bringt. So bleiben immer wieder einzelne Kugeln an der Sinterform, die nach dem Stand der Technik bisher verwendet wird, hängen und fehlen dann auf der Implantatoberfläche. Zugleich verursachen die, an der Sinterform anhaftenden Titankugeln eine schwierig Reinigung der Formoberfläche. Andererseits können auch Anteile der Sinterform, namentlich Graphit, zu unerwünschten Verunreinigungen an der Implantatoberfläche führen.

Neben einer geschlossenen Ringkontur kann der Kragen 4 des Implantatkernes 1 vorteilhafter Weise auch mit Ausschnitten 8 versehen sein, die kronenartig in den Kragen 4 eingebracht sind. Durch diese Ausschnitte 8 wird die Perfusion des Knochengewebes, das sich im Innenraum 6 des Implantatkernes 1 und im distalen Bereich des im Kieferknochen eingesetzten Implantates bildet, zusätzlich gefördert und verhindert, dass kleinere Knochengewebeteile, die sich auf der oberen Fläche des Kragens bilden wollen bzw. dorthin während der Operation verfrachtet wurden, nicht mehr ausreichend ernährt werden und letztlich absterben.

### BEZUGSZEICHENAUFSTELLUNG

- 1: Implantatkern
- 2: Abutment
- 3: Zahnkrone
- 4: Kragen
- 5: äußerer Ringraum
- 6: Innenraum
- 7: Titankugeln
- 8: Ausschnitt

- D: Außendurchmesser

## Patentansprüche

1. Enossales Implantat, das crestal in den Kieferknochen eingesetzt wird und eine durch Titankugeln vergrößerte Oberflächenstruktur besitzt, die auf der äußeren Mantelfläche des Implantates aufgesintert sind, **dadurch gekennzeichnet, dass** im Eckbereich des distalen Endes des Implantatkernes (1) ein umlaufender Kragen (4) vorgesehen und so unter einem Winkel α zur Längsachse des Implantates angeordnet ist, dass zwischen dem Kragen (4) und dem Kopfbereich des Implantatkernes (1) ein äußerer Ringraum (5) und ein durch die Kontur des Kragens begrenzter fußseitiger Innenraum (6) entsteht; und das der Außendurchmesser des Kragens (4) auf die finale Endform des Implantates einschließlich der aufgesinterten Titankugeln abgestimmt ist.

2. Enossales Implantat nach Anspruch 1, **dadurch gekennzeichnet, dass** in die Kontur des Kragens (4) Ausschnitte (8) eingebracht sind.

3. Enossales Implantat nach Anspruch 1, **dadurch gekennzeichnet, dass** der Kragen (4) eine geschlossene Ringkontur besitzt.

4. Enossales Implantat nach Anspruch 1, **dadurch gekennzeichnet, dass** in die aufzusinternde Schicht (7) aus Titankugeln Kugelanteile aus einem, während des Sinterprozesses abschmelzenden Material eingebracht sind.

5. Verfahren zur Herstellung eines enossalen Implantats nach Anspruch 1, das crestal in den Kieferknochen eingesetzt wird und eine durch Titankugeln vergrößerte Oberflächenstruktur besitzt, die auf der äußeren Mantelfläche des Implantates aufgesintert sind, **dadurch gekennzeichnet, dass** zunächst ein vorgefertigter Implantatkern (1), der zur Aufnahme der Titankugeln (7) mit einem finalen, äußeren Ringraum (5) und einem fußseitigen Innenraum (6) versehen ist, angefertigt, in diese Räume (5; 6) die aufzubringenden Titankugeln (7) temporär fixiert und danach aufgesintert und nach dem Aufsintern die inneren Präzisionsflächen - Innenkonus, Innengewinden und die innere Rotationssicherung - und die äußeren Passflächen - Außenkonus und Außensechskant hergestellt werden.

6. Verfahren nach Anspruch 5, **dadurch gekennzeichnet, dass** in den vorgefertigten Implantatkern (1) eine Innenbohrung eingebracht wird und die Außenkontur des Implantatkernes (1) die zur Positionierung der äußeren Passflächen oder des Außenkonus dient, mit einem Aufmaß hergestellt ist und parallele Eingriffsflächen enthält.

7. Verfahren nach Anspruch 5 und 6, **dadurch gekennzeichnet, dass** die inneren Präzisionsflächen und die äußeren Passflächen durch spanabhebende Formgebung hergestellt werden, wobei der vorgefertigte Implantatkern (1) mit den aufgesinterten Titankugeln (7) zunächst über die mit einem Aufmaß versehene Außenkontur zentriert in eine Bearbeitungsmaschine eingespannt wird und die inneren Präzisionsflächen fertiggestellt werden und danach bei Aufnahme des Implantatkernes (1) über die fertiggestellten inneren Präzisionsflächen, die Endbearbeitung der äußeren Passflächen erfolgt.

8. Verfahren nach Anspruch 6 und 7, **dadurch gekennzeichnet, dass** die spanabhebende Endfertigung des Implantatkernes (1) mit den aufgesinterten Titankugeln (7) unter ständiger Luftkühlung erfolgt.

## Claims

1. Enossal implant that is inserted crestally into the jaw bones and that has a surface structure enlarged by titanium spheres sintered onto the outer covering surface of the implant, **characterized in that** a peripheral collar (4) is provided n the corner region of the distal end of the implant core (1), arranged at an angle α to the longitudinal axis of the implant such that an external annular space (5) appears between the collar (4) and the head region of the implant core (1) and an inner space (6) bounded on the foot side by the contour of the collar appear, and that the outside diameter of the collar (4) is determined by the final shape of the implant including the sintered-on titanium spheres.

2. Enossal implant according to claim 1, **characterized in that** depressions (8) are produced in the contour of the collar (4).

3. Enossal implant according to claim 1, **characterized in that** the collar (4) has a closed annular contour.

4. Enossal implant according to claim 1, **characterized in that** portions of beads of a material that melts off during the sintering process are applied in the layer (7) to be sintered on.

5. Process for producing an enossal implant according to claims 1 that is inserted crestally into the jawbones and has a surface structure enlarged by titanium spheres sintered onto the outer covering surface of the implant, **characterized in that** first a premade implant core (1) provided with a final external annular space (5) and an internal space (6) at the foot side is produced to hold the titanium spheres; the titanium spheres (7) to be applied are fixed temporarily in these spaces (5, 6) and then sintered on and after the sintering the internal precision surfaces - the inner cone, internal threads, and the internal means of securing against rotation - and the external matching surfaces - external cone and external hexagon, are produced.

6. Process according to claim 5, **characterized in that** an internal hole that serves to position the outer matching surfaces or the outer cone is made in the pre-made implant core (1), which is made to a dimension and has parallel contact surfaces.

7. Process according to claims 5 and 6, **characterized in that** the internal precision surfaces and the outer matching surfaces are produced by machining shaping, in which the pre-made implant core (1) with the sintered-on titanium spheres (7) is first clamped centered in a processing machine and the internal precision surfaces are produced, after which the final processing of the outer matching surfaces is done with the implant core (1) inserted over the finished internal precision surfaces.

8. Process according to claims 6 and 7, **characterized in that** the final machining production of the implant core (1) is accomplished with the sintered-on titanium spheres (7) under continuous air cooling.

## Revendications

1. Implant endo-osseux inséré au niveau crestal dans l'os de la mâchoire et possédant une structure de surface augmentée par des billes de titane frittées sur la surface d'enveloppe extérieure de l'implant, **caractérisé en ce qu'**il est prévu dans l'angle de l'extrémité distale de l'âme de l'implant (1) un collet continu (4) disposé en formant un angle α par rapport à l'axe longitudinal de l'implant tel qu'il se crée entre le collet (4) et la partie supérieure de l'âme de l'implant (1) un espace annulaire extérieur (5) et un espace intérieur du côté du pied (6) délimité par le contour du collet ; et **en ce que** le diamètre extérieur du collet (4) est adapté à la forme finale de l'implant y compris les billes de titane frittées sur celui-ci..

2. Implant endo-osseux selon la revendication 1, **caractérisé en ce que** des découpes (8) sont ménagées dans le contour du collet (4).

3. Implant endo-osseux selon la revendication 1, **caractérisé en ce que** le collet (4) a un contour annulaire fermé.

4. Implant endo-osseux selon la revendication 1, **caractérisé en ce que** des portions en billes d'un matériau destiné à fondre au cours de l'opération de frittage sont introduites dans la couche (7) de billes de titane à fritter.

5. Procédé pour la fabrication d'un implant endo-osseux selon la revendication 1, inséré au niveau crestal dans l'os de la mâchoire et possédant une structure de surface augmentée par des billes de titane frittées sur la surface d'enveloppe extérieure de l'implant, **caractérisé en ce qu'**une âme d'implant (1) préfabriquée, dotée pour recevoir les billes de titane (7) d'un espace annulaire extérieur final (5) et d'un espace intérieur du côté du pied (6), est d'abord fabriquée, les billes de titane (7) à appliquer sont temporairement fixées dans ces espaces (5 ; 6) puis appliquées par frittage et les surfaces de précision intérieures (cône intérieur, filetages intérieurs et fixation antirationnelle intérieure) et les surfaces d'ajustement extérieures (cône extérieur et hexagone extérieur) sont fabriquées après le frittage.

6. Procédé selon la revendication 5, **caractérisé en ce qu'**un trou intérieur est ménagé dans l'âme d'implant (1) préfabriquée et le contour extérieur de l'âme d'implant (1) servant au positionnement des surfaces d'ajustement extérieures ou du cône extérieur est fabriqué en étant surdimensionné et comporte des surfaces de prise parallèles.

7. Procédé selon les revendications 5 et 6, **caractérisé en ce que** les surfaces de précision intérieures et les surfaces d'ajustement extérieures sont fabriquées par formage avec enlèvement de matière, l'âme d'implant (1) préfabriquée sur laquelle les billes de titane (7) sont frittées étant d'abord serrée dans une machine d'usinage en étant centrée par le contour extérieur surdimensionné et les surfaces de précision intérieures finies, puis l'usinage final des surfaces d'ajustement extérieures ayant lieu alors que l'âme de l'implant (1) est reçue sur les surfaces de précision intérieures finies.

8. Procédé selon les revendications 6 et 7, **caractérisé en ce que** l'usinage final avec enlèvement de matière de l'âme de l'implant (1) avec les billes de titane (7) frittées est effectué sous refroidissement continu par air.
